# EUROPEAN PATENT SPECIFICATION

(11) **EP 0 962 085 B1**
(45) Date of publication and mention of the grant of the patent: **02.08.2006**
(21) Application number: 98957068.4
(22) Date of filing: 14.12.1998
(51) Int. Cl.: H04M 1/00

(54) **A METHOD AND A DEVICE FOR SPEECH PRESENTATION OF EVENTS ON A SPEECH CHANNEL**
ANMELDUNGSVERFAHREN UND VORRICHTUNG MIT SPRACHMITTEILUNGEN VON EREIGNISSEN ÜBER EINEN SPRACHKANAL
PROCEDE ET DISPOSITIF DE PRESENTATION D'EVENEMENTS VOCAUX SUR UN CANAL VOCAL

(30) Priority: 23.12.1997 EP 97403135
(43) Date of publication of application: 08.12.1999
(73) Proprietor: Koninklijke Philips Electronics N.V., 5621 BA Eindhoven (NL)
(72) Inventor: FABLET, Eric, NL-5656 AA Eindhoven (NL)
(74) Representative: Mak, Theodorus Nicolaas
(86) International application number: PCT/IB1998/002008
(87) International publication number: WO 1999/034573

(56) References cited:
- EP-A- 0 472 289
- WO-A-96/19069
- US-A- 4 737 976
- US-A- 5 499 286

## Description

A method and apparatus for in a portable device running a speech processing application whilst outputting application speech on a speech output channel for presentation with such device being positioned in proximity with a user person, whilst in the device detecting one or more dynamic device events independently generated by the device, the output channel being in either of two states, for in a first state outputting said application speech alone, and in a second state outputting both said application speech and also speech signalization of said events, whilst maintaining them both at a sufficiently perceptible level.

### BACKGROUND OF THE INVENTION

The invention relates to a method as recited in the preamble of Claim 1. Various types of portable and battery fed devices allow for presenting application-speech and require that the device be kept close to the user's ear. Often, the latter type of usage is transient, as the device may be left lying around for most of the time. For signalling information to the user such device will generally have a visual display that may communicate various conditions. However, when the device is actually being listened to, it will be kept so close to the user's head that the visual display gets out of the field of sight. In particular, dynamic events will then get lost to a user. It would be good for the user to perceive certain events immediately. Generally, application speech may have a content that is irrelevant to the operation of the device proper. On the other hand, system speech is directly linked to the operation of the device; the meaning for such operation is generally programmed in advance.

### SUMMARY TO THE INVENTION

In consequence, amongst other things, it is an object of the present invention to present dynamic events immediately to a user person, even if visual display were ineffective for such presenting. Now therefore, according to one of its aspects the invention is characterized as recited in the characterizing part of Claim 1. By itself, it would be technically feasible to combine a unique audio signalling such as a beep, with a visual indication of the nature of the event. This would however necessitate a user to interrupt a telephone call for several seconds at least, which would be felt as annoying.

Now, Kobayashi (D1, US 5,499,286) has a portable device of the same technical field, and which portable device also has speech generated by the device itself. The reference apparatus has a ***particular function key*** that indicates a read operation from the operating section. This means that manual intervention by the user person is necessary to let the speech generated by the portable device itself be outputted. Furthermore, D1 indeed uses a ***multiplexer,*** the present application likewise claiming a multiplexer facility in present Claim 3. D1 may want to store the ***operator's own voice*** as corresponding to the function key.

Now , of the four examples recited behind the bullets hereinafter, the first event is produced by the operating system of the portable device itself (battery low), whereas the other three events are produced by the application system (i.e. the organization of the telephone communication). Of these latter three, the second and fourth events find their cause ***outside*** the portable apparatus proper. Finally, the third event, non-recognition of the user's voice, is also outside the user's ***manual*** control. In fact, all four examples pertain to signalling actual or impending malfunctioning of some aspect of the apparatus' operation.

Furthermore, D1 has a multiplexer, which for being operative, should be operated in a static manner, wherein either the application speech, or alternatively, the speech from the speech synthesizer is transmitted, whereby only one of them will be rendered audible at a time. In contradistinction, the present invention has the distinctive speech item as a kind of ***interference*** for the application speech, the latter being nevertheless continued, so that the application speech will not be interrupted. Persons skilled in the pertinent art would from the disclosure explaining that speech interruption of "only a few seconds" were annoying, recognize that an interruption should be many times smaller, perhaps only a small fraction of a second, if perception should remain at approximately the same level.

Further, all examples recited link the invention with an actual or impending malfunction of the system, which is moreover, initiated outside the current field of interest of the user (i.e., the speech producing of the application proper). The term "event" signals "independence" from the user's actions.

As regarding D2 (US 4,737,976) the very first line of its Abstract defines a "hands-free control and dialing system", which should then be operated by speech input. Admittedly, the reference specifies various kinds of speech output, cf. Col. 8, lines 13-23. However, these items specifically relate to a user-system ***dialogue,*** whereas the present invention has the application speech continue during the presentation of the system information; inherantly, the user won't then dialogue with the system, but rather, is being a little distracted from any communication of the application level.

Finally, D3 (EP A2 472 289) uses a speakerphone loudspeaker for signalling to a user at various different signal strengths. Given the alternatives in its Figs. 5 and 6 that use a head-set and a hand-set, respectively, the problem solved by the invention is fully unthinkable in the reference. D3 has its apparatus placed far from the head, whereas the present invention has the device closer to the ear than to the eyes of the user, and will therefor "mix" the two kinds of speech. D3 could use signalling by visual means, and specifying of the conditions could be done visually.

The invention also relates to a device for implementing the method. Further advantageous aspects of the invention are recited in dependent Claims.

### BRIEF DESCRIPTION OF THE DRAWING

These and further aspects and advantage of the invention will be discussed more in detail hereinafter with reference to the disclosure of preferred embodiments, and in particular with reference to the appended Figures that show:
Figure 1, a block diagram of a portable telephone;
Figure 2, a flow diagram of a procedure of the invention;
Figure 3, a first embodiment of the invention;
Figure 4, a second embodiment of the invention.

### DETAILED DESCRIPTION OF PREFERRED EMBODIMENTS

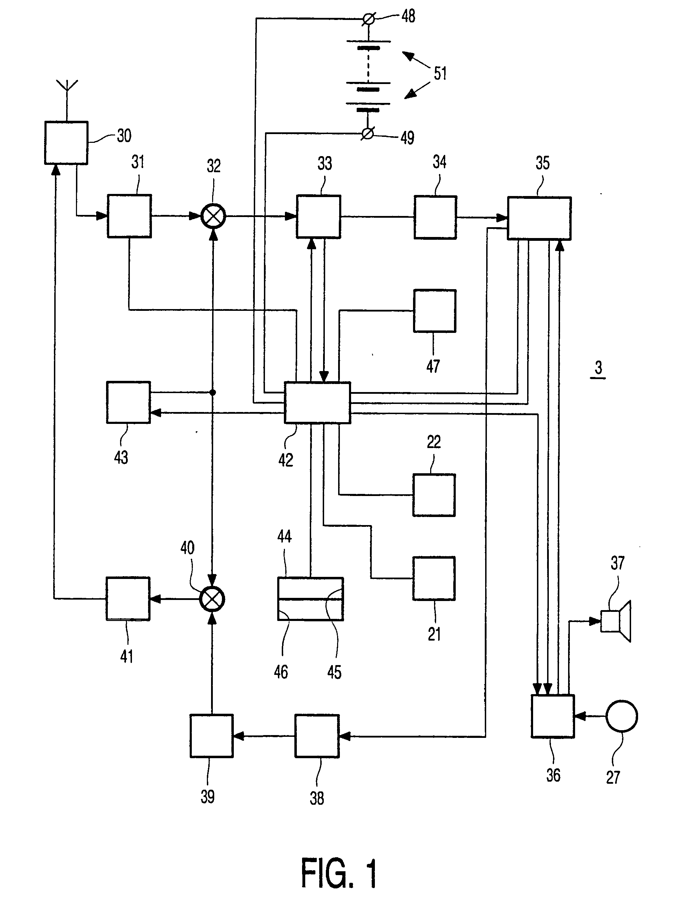

Figure 1 is a block diagram of a portable telephone. Furthermore, although the invention has been conceived in particular for use with a portable telephone, various other portable and battery powered application-speech outputting devices would benefit from the invention. For one, the device may be organized as a receiver only without transmitter facility.

The set-up of Figure has been organized largely according to European Patent EP 494 526 B1. The diagram has device **3** comprising a reception path and a transmission path, both coupled to antenna switch **30.** The reception path comprises a cascade of a tunable filter **31,** a mixer **32,** a switchable IF_filter **33,** a detector **34,** a Time division Multiplex (TDMA) controller **35,** a modolator **38**, an offset oscillator **39,** a mixer **40,** and a power amplifier **41**. A microprocessor **42** has been provided for controlling the functionality of the telephone. Various conventional features, such as the controlling of a synthesizer **43** so as to tune to a specific frequency channel, controlling TDMA controller **35,** scanning the keypad **22,** and controlling visual display **21,** have not been discussed here in further detail, such functioning per se being well-known in the art. A memory **44** including a non-volatile memory part **45,** and a volatile memory part **46,** has been coupled to microprocessor **42.** The non-volatile memory part **45** comprises a telephone functionality program. Furthermore, the device comprises power leads **48** and **49,** interconnected to an exchangeable battery **51** for powering the device. By way of implication, only the powering of microprocessor **42** has been indicated. Finally, the device contains a microphone **27** and a loudspeaker **37**. For a portable telephone, the loudspeaker is low-volume, and the microphone low-sensitivity, so that during a call, the device must be kept at most a few centimeters from a user person's head. The housing of the device has not been indicated, but is generally conventional.

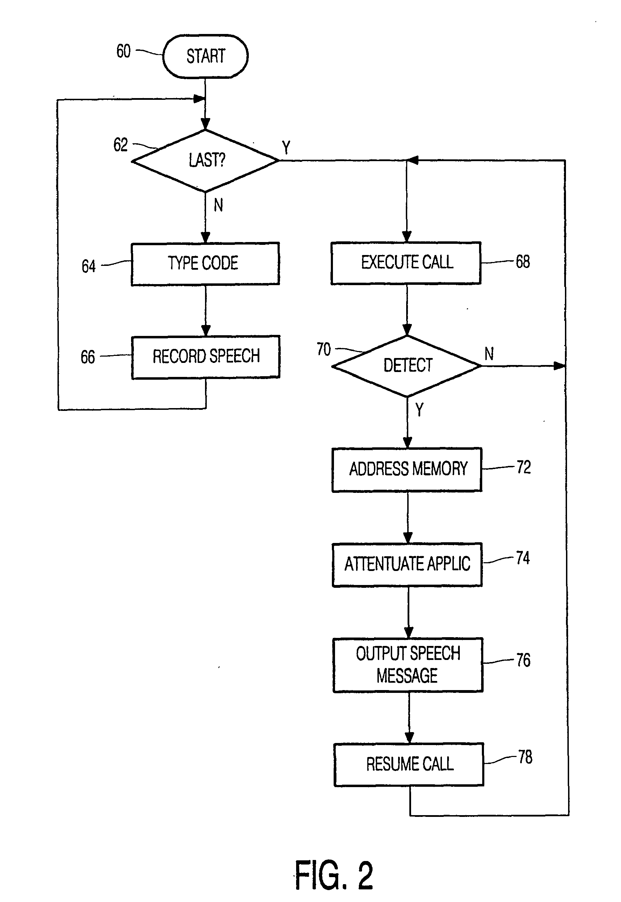

Figure 2 is a flow diagram of a procedure according to the invention. In more of the operational functionalities, such as by dialling a number, or even only when the device enters an application state wherein application-speech may be outputted in principle. Such application-speech could then relate to an actual telephone call, or to speech recorded on an automatic answering functionality within or remote from the device in question. In fact, in other situations than when the device should be listened to from short distance, the visual display could be used for signalling various events, in a manner that would be less distracting or less annoying to an environment. If required, the outputting of the speech items may go in parallel with the visual display.

In block 62, the device detects, such as from the actuating of a programming button, whether or not a user wants to program the device with the user's own voice. If the user signals that none or no further speech item needs to be recorded (Y), the device exits to block 68. The recording is executed in blocks 64, 66. For the programming in block 64, the user inputs a particular code that has been assigned to any of a set of events that has been specified in the device's manual. In block 66, the speech item to be outputted in relation to the particular event is recorded in the (non)volatile memory. In particular, this may be a so-called flash memory that stores the speech in compressed form. The compressing may be done according to one of several known procedures. The user programming is considered advantageous, because otherwise the number of different messages times the number of languages could overtax memory capacity.

The loop consisting of the latter two blocks may in principle be traversed an unlimited number of times. For brevity, procedures for erasing and/or overwriting of messages have been ignored for brevity.

After leaving block 62, the calling functionality of the device has been symbolized by block 68. By itself, this functionality is well-known and has not been detailed further. After terminating a particular call, the device may leave the flow chart as shown, thereby allowing a next entering into block 60. Alternatively, terminating a call may automatically start such entering. During the call, the device may be continually looping through block 70, for therein detecting the occurrence of any of the prespecified events. If the code pertaining to a particular event is received, in block 72 the speech storing memory is addressed with an address that is derived immediately from the event code. Next, in block 74 the application-speech produced by the actual telephone call is attenuated by a certain amount, such as a few dB. In block 76 the speech item pertaining to the event in question is outputted in superposition to the application speech present at that instant if any. In block 78 the outputted application speech pertaining to the telephone call is resumed again at full volume, and it is left to the user person to take any appropriate measures in relation to the event just signalled.

If necessary, certain measures are taken with respect to the locally generated audio output so as to avoid transmitting the associated sound to the other party of a telephone call. Such measures however are standard practice in telephone technology.

The following events, or a subset thereof, may be signalled to the user:
- the charging state of the battery goes below a certain threshold, such as 25, 50, or 75%, which is a system-determined event;
- for one of several different reasons, a requested call cannot be effected;
- during voice-actuated dialling by the user person the device does not recognize the voice command;
- during an actual call, a further incoming call is detected that for the moment may not be honoured; all latter three events are application-determined.

As required, further events may be signalled to a user, depending on the field of application of the device in question, or on particular wishes of a user.

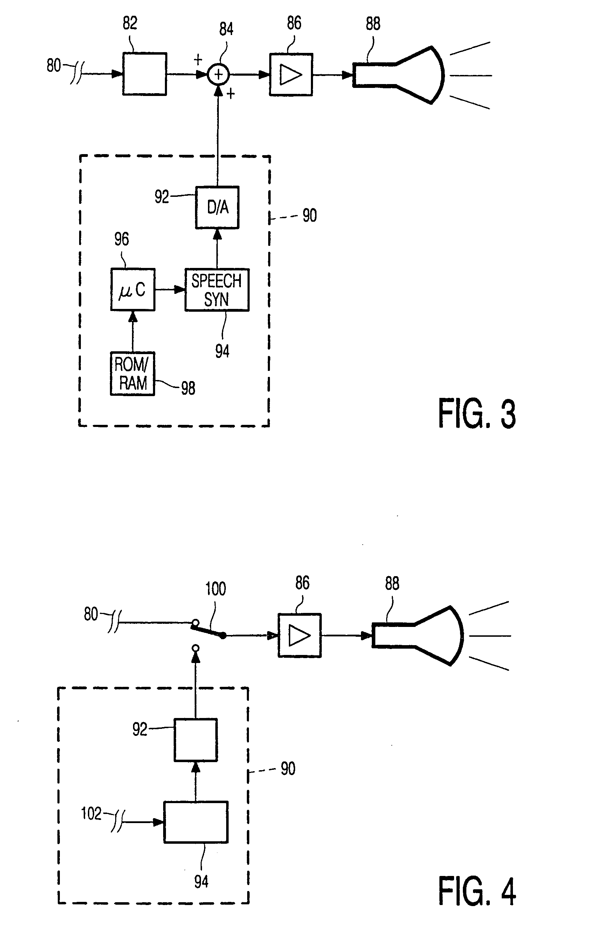

Figure 3 shows a first embodiment of the invention as generally corresponding to the procedure of Figure 2. At top left, item 80 symbolizes the forming of application speech that should be presented to a user person. For a telephone application, this may be the speech communicated from the other party to a conversation. Attenuator element 82 is controllable through the mechanism that drives the co-presentation of the speech presentation items. Element 84 is an analog adder with two inputs. Element 86 is an analog audio amplifier. Element 88 is a loudspeaker. Furthermore, in message generator 90, microcontroller element 96 provides the speech items through addressing ROM/RAM 98 with appropriate addresses. Activation of the microcontroller is through detecting the various conditions listed supra. Speech synthesizer item 94 is activated by the information from memory 98 and may operate according to standard speech synthesizing technology. Digital to analog converter item 92 converts the codes received from the speech synthesizer to analog speech signals, for presentation to analog adder 84, for superposing on the signals from the application speech channel.

Figure 4 is a second embodiment of the invention, that has various items corresponding to Figure 3 and carrying identical labels. Instead of superposing, the embodiment has multiplexing on the speech output channel. This is effected by multiplexing switch 100 that is again controlled by the features according to the invention.

## Claims

1. A method for in a portable device running a speech processing application and by said application outputting application speech on a speech output channel (36,37) for presentation with such device being positioned in proximity with a user person, whilst in the device selectively detecting (70) one or more dynamic device events independently generated by the device, and then visually displaying a representation of such dynamic event,
said method being **characterized by** converting such detected dynamic event into an associated distinctive speech item (72) and directing such distinctive speech item to said speech output channel for presentation to said user person of said distinctive speech item (76) concurrently with continuing the outputting of said application speech, thereby controlling said output channel alternatively in one of two states, for in a first state outputting said application speech alone (78), and in a second state outputting both said application speech and also said distinctive speech item, whilst maintaining them both at a sufficiently perceptible level.

2. A method as claimed in Claim 1, wherein said distinctive speech item is superposed (84) on said application speech on said application speech output channel for perceptively combining to said user person.

3. A method as claimed in Claim 1, wherein said distinctive speech item is electronically multiplexed (100) with said application speech presentation to said user person.

4. A method as claimed in Claim 1, wherein said distinctive speech item is prerecorded by said user person, and thereupon said distinctive speech item is made selectively accessible through a machine detecting of said dynamic event.

5. A method as claimed in Claim 1, and selecting such dynamic event from a set of events that comprises both dynamic events related to said speech processing application and also dynamic device events related to the device system.

6. A method as claimed in Claim 2, wherein during said superposing said application speech is transiently attenuated (74).

7. A portable device that is arranged for implementing a method as claimed in Claim 1, said portable device being arranged for running a speech processing application and comprising a speech output channel (88) for outputting application speech generated by said application for presentation when being positioned in proximity with a user person, whilst in the device furthermore comprising detection means (70) for detecting one or more dynamic device events independently generated by the device without intervention by the user person, and comprising display means for visually displaying a representation of such dynamic event,
said portable device being **characterized by** comprising converting means for converting such detected dynamic device event into an associated distinctive speech item (94), and directing means for directing such distinctive speech item to said speech output channel for presentation to said user person of said application speech whilst continuing outputting of said application speech together with said distinctive speech item, said device having state control means for in a first state outputting said application speech alone, and in a second state outputting both said application speech and also said distinctive speech items, whilst maintaining them both at a sufficiently perceptible level.

8. A portable device as claimed in Claim 7, and implemented as a two-way portable telephone.

## Patentansprüche

1. Verfahren, um in einer tragbaren Einrichtung, die eine Sprachverarbeitungsanwendung ausführt, und durch diese Anwendung Anwendungssprache zur Präsentation auf einem Sprachausgabekanal (36, 37) auszugeben, wobei die Einrichtung in der Nähe einer Benutzerperson positioniert ist, während in der Einrichtung ein oder mehrere, unabhängig von der Einrichtung generierte dynamische Ereignisse selektiv detektiert werden (70) und dann eine visuelle Darstellung eines dynamischen Ereignisses visuell angezeigt wird,
**gekennzeichnet durch** Umwandeln eines detektierten dynamischen Ereignisses in ein zugeordnetes kennzeichnendes Sprachelement (72) und Leiten des kennzeichnenden Sprachelements an den Sprachausgabekanal zur Präsentation des kennzeichnenden Sprachelements (76) an die Benutzerperson bei gleichzeitigem Fortsetzen des Ausgebens der Anwendungssprache, wodurch der Ausgabekanal alternativ in einem von zwei Zuständen gesteuert wird, um in einem ersten Zustand die Anwendungssprache allein auszugeben (78) und in einem zweiten Zustand sowohl die Anwendungssprache als auch das kennzeichnende Sprachelement auszugeben und dabei beide auf einem hinreichend wahrnehmbaren Pegel zu halten.

2. Verfahren nach Anspruch 1, wobei das kennzeichnende Sprachelement auf dem Anwendungssprachausgabekanal der Anwendungssprache überlagert wird (84), um das kennzeichnende Sprachelement und die Anwendungssprache in der Wahrnehmung der Benutzerperson zu kombinieren.

3. Verfahren nach Anspruch 1, wobei das kennzeichnende Sprachelement mit der Anwendungssprachpräsentation an die Benutzerperson elektronisch multiplexiert wird (100).

4. Verfahren nach Anspruch 1, wobei das kennzeichnende Sprachelement im Voraus von der Benutzerperson aufgezeichnet und später durch eine maschinelle Detektion des dynamischen Ereignisses selektiv zugänglich gemacht wird.

5. Verfahren nach Anspruch 1 und Auswählen eines dynamischen Elements aus einem Satz von Ereignissen, der sowohl die Sprachverarbeitungsanwendung betreffende dynamische Ereignisse als auch das Einrichtungssystem betreffende dynamische Einrichtungsereignisse umfasst.

6. Verfahren nach Anspruch 2, wobei die Anwendungssprache während des Überlagerns vorübergehend gedämpft wird (74).

7. Tragbare Einrichtung, die zum Implementieren eines Verfahrens nach Anspruch 1 eingerichtet ist, wobei die tragbare Einrichtung zum Ausführen einer Sprachverarbeitungsanwendung eingerichtet ist und Folgendes umfasst: einen Sprachausgabekanal (88) zum Ausgeben von durch die Anwendung generierter Anwendungssprache zur Präsentation, wenn die tragbare Einrichtung in der Nähe einer Benutzerperson positioniert ist, sowie ferner Detektionsmittel (70) zum Detektieren eines oder mehrerer, unabhängig von der Einrichtung ohne Eingriff durch die Benutzerperson generierter dynamischer Ereignisse der Einrichtung und Anzeigemittel zum visuellen Anzeigen einer Darstellung eines dynamischen Ereignisses,
**dadurch gekennzeichnet, dass** die tragbare Einrichtung Folgendes umfasst: Umwandlungsmittel zum Umwandeln des detektierten dynamischen Ereignisses der Einrichtung in ein zugeordnetes kennzeichnendes Sprachelement (94) sowie Leitmittel zum Leiten des kennzeichnenden Sprachelements an den Sprachausgabekanal zur Präsentation der Anwendungssprache an die Benutzerperson bei gleichzeitigem Fortsetzen des Ausgebens der Anwendungssprache zusammen mit dem kennzeichnenden Sprachelement, wobei die Einrichtung Zustandssteuerungsmittel aufweist, um in einem ersten Zustand die Anwendungssprache allein auszugeben und in einem zweiten Zustand sowohl die Anwendungssprache als auch die kennzeichnenden Sprachelemente auszugeben und dabei beide auf einem hinreichend wahrnehmbaren Pegel zu halten.

8. Tragbare Einrichtung nach Anspruch 7 und implementiert als tragbares Gegensprechtelefon.

## Revendications

1. Procédé pour, dans un dispositif portable, exécuter une application de traitement de la parole et, par ladite application, fournir en sortie de la parole produite par l'application sur un canal de sortie de la parole (36 ; 37) pour sa présentation, un tel dispositif étant placé près d'un utilisateur, tout en, détectant de manière sélective dans le dispositif (70) un ou plusieurs événements de dispositif dynamiques générés indépendamment par le dispositif, puis en affichant visuellement une représentation de cet événement dynamique ;
ledit procédé étant **caractérisé par** la conversion d'un tel événement dynamique détecté en un élément de parole caractéristique (72) associé et la direction d'un tel élément de parole caractéristique vers ledit canal de sortie de la parole pour la présentation audit utilisateur dudit élément de la parole caractéristique (76) simultanément à la poursuite de la fourniture en sortie de ladite parole produite par l'application, commandant de ce fait ledit canal de sortie alternativement dans un des deux états pour, dans un premier état, fournir en sortie ladite parole produite par l'application (78) seule, et, dans un deuxième état, fournir en sortie à la fois ladite parole produite par l'application et ledit élément de parole caractéristique, tout en les maintenant tous deux à un niveau suffisamment perceptible.

2. Procédé suivant la revendication 1, dans lequel ledit élément de parole caractéristique est superposé (84) sur ladite parole produite par l'application sur ledit canal de sortie de la parole produite par l'application pour les combiner sur le plan perceptuel avant de les présenter audit utilisateur.

3. Procédé suivant la revendication 1, dans lequel ledit élément de parole caractéristique est électroniquement multiplexé (100) avec ladite présentation de la parole produite par l'application audit utilisateur.

4. Procédé suivant la revendication 1, dans lequel ledit élément de parole caractéristique est préenregistré par ledit utilisateur, et, à ce moment, ledit élément de parole caractéristique est rendu accessible de manière sélective par la détection par une machine dudit événement dynamique.

5. Procédé suivant la revendication 1, et sélectionnant un tel événement dynamique parmi un jeu d'événements qui comprend à la fois des événements dynamiques se rapportant à ladite application de traitement de la parole et des événements de dispositif dynamiques se rapportant au système du dispositif.

6. Procédé suivant la revendication 2, dans lequel pendant ladite superposition, ladite parole produite par l'application est temporairement atténuée (74)

7. Dispositif portable qui est à même de mettre en oeuvre un procédé suivant la revendication 1, ledit dispositif portable étant à même d'exécuter une application de traitement de la parole et comprenant un canal de sortie de la parole (88) pour fournir en sortie de la parole produite par l'application générée par ladite application pour sa présentation lorsqu'il est placé près d'un utilisateur, le dispositif comprenant en outre des moyens de détection (70) pour détecter un ou plusieurs événements de dispositif dynamiques générés indépendamment par le dispositif sans l'intervention de l'utilisateur, et comprenant des moyens d'affichage pour afficher visuellement une représentation d'un tel événement dynamique ;
ledit dispositif portable étant **caractérisé en ce qu'**il comprend des moyens de conversion pour convertir cet événement de dispositif dynamique détecté en un élément de parole caractéristique (94) associé, et des moyens de direction pour diriger un tel élément de parole caractéristique vers ledit canal de sortie de la parole pour la présentation audit utilisateur de ladite parole produite par l'application tout en continuant à fournir en sortie ladite parole produite par l'application ainsi que ledit élément de parole caractéristique, ledit dispositif comprenant des moyens de commande d'état pour, dans un premier état, fournir en sortie ladite parole produite par l'application seule, et, dans un deuxième état, fournir en sortie à la fois ladite parole produite par l'application et lesdits éléments de parole caractéristiques, tout en les maintenant à un niveau suffisamment perceptible.

8. Dispositif portable suivant la revendication 7, et réalisé sous la forme d'un téléphone portable bidirectionnel.
